# FASCICULE DE BREVET EUROPEEN

(11) **EP 3 964 558 B1**
(45) Date de publication et mention de la délivrance du brevet: **14.06.2023**
(21) Numéro de dépôt: 21191621.8
(22) Date de dépôt: 17.08.2021
(51) Int. Cl.: C10L 3/10

(54) **INSTALLATION ET PROCÉDÉ D'AJUSTEMENT DE LA PRODUCTION DE BIOMÉTHANE EN FONCTION DE L'UNITÉ DE VALORISATION DE BIOMÉTHANE**
ANLAGE UND VERFAHREN ZUR ANPASSUNG DER BIOMETHANPRODUKTION AN DIE BIOMETHAN-VERWERTUNGSEINHEIT
INSTALLATION AND METHOD FOR ADJUSTING THE PRODUCTION OF BIOMETHANE TO THE BIOMETHANE UTILISATION UNIT

(30) Priorité: 07.09.2020 FR 2009062
(43) Date de publication de la demande: 09.03.2022
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: GRABIE, Véronique, 38360 Sassenage (FR); GARNAUD, Delphine, 38360 Sassenage (FR); CADIC, Lucille, 38360 Sassenage (FR); GUILLIN, Michaël, 38360 Sassenage (FR)
(74) Mandataire: Air Liquide

(56) Documents cités:
- EP-A1- 3 666 369
- EP-A1- 3 666 880
- EP-A1- 3 695 897

## Description

La présente invention est relative à une installation d'ajustement de la production de biométhane à partir de biogaz en fonction du fonctionnement d'une unité de valorisation de biométhane, et à un procédé utilisant une telle installation.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL).

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Dans certains cas, les unités de valorisation auront un besoin moindre en biométhane (cela peut être dû à plusieurs raisons, dont l'indisponibilité des équipements avals ou encore lorsque le biométhane est rejeté par le poste d'injection car il se trouve de manière transitoire en dehors des spécifications requises) et rejetteront temporairement le biométhane qui sera brûlé ou renvoyé au digesteur.

Cependant ces deux solutions présentent les inconvénients suivants :
- Si le biométhane est brûlé temporairement, une torche spécifique au biométhane doit être investie, avec une utilisation erratique,
- Si le biométhane est recyclé dans le digesteur, la teneur en méthane dans le digesteur sera modifiée et la composition du biogaz brut évoluera, empêchant la production d'un flux à concentration constante en méthane.

Partant de là, un problème qui se pose est de fournir une installation permettant de supprimer les inconvénients ci-dessus.

Une solution est une installation d'ajustement de la production de biométhane en fonction du fonctionnement d'une unité de valorisation de biométhane, comprenant :
- Un digesteur permettant de produire du biogaz,
- Une unité de séparation membranaire permettant de produire un flux de biométhane et un flux de dioxyde de carbone à partir du biogaz issu du digesteur,
- Une unité de valorisation du biométhane issu de l'unité de séparation membranaire,
- Un premier moyen permettant de mélanger le flux de biométhane et le flux de dioxyde de carbone issus de l'unité de séparation membranaire,
- Un deuxième moyen permettant d'envoyer un signal de commande de l'unité de valorisation au premier moyen, et
- Un troisième moyen permettant de recycler le mélange issu du premier moyen dans le digesteur.

Autrement dit l'installation permet en mélangeant du biométhane et du dioxyde de carbone de reformer du biogaz avant de le recycler dans le digesteur.

Selon le cas, l'installation selon l'invention peut présenter une ou plusieurs des caractéristiques ci-dessous :
- L'installation comprend un moyen permettant de désulfurer le biogaz en aval du digesteur et en amont de l'unité de séparation membranaire,
- L'installation comprend un compresseur en aval du digesteur et en amont de l'unité de séparation membranaire,
- l'unité de valorisation du biométhane est un réseau de gaz naturel,
- le premier moyen permettant de mélanger le flux de biométhane et le flux de dioxyde de carbone comprend une tuyauterie.
- l'unité de séparation membranaire comprend un premier étage de séparation par membrane apte à recevoir le biogaz et à fournir un premier perméat et un premier rétentat, un deuxième étage de séparation par membrane apte à recevoir le premier rétentat et à fournir un second perméat et un second rétentat, et un troisième étage de séparation par membrane apte à recevoir le premier perméat et à fournir un troisième perméat et un troisième rétentat. L'unité de séparation membranaire pourra également comprendre une quatrième unité de séparation par membrane apte à recevoir le troisième rétentat et à fournir un quatrième perméat et un quatrième rétentat,
- chaque étage de séparation par membrane comprend une membrane plus perméable au dioxyde de carbone qu'au méthane.

La présente invention a également pour objet un procédé d'ajustement de la production de biométhane en fonction du fonctionnement d'une unité de valorisation de biométhane, utilisant une installation selon l'invention et comprenant :
a) Une étape de production de biogaz dans le digesteur,
b) Une étape de traitement du biogaz dans l'unité de séparation membranaire de manière à produire un flux de biométhane et un flux de dioxyde de carbone,
c) Une étape de valorisation du biométhane dans l'unité de valorisation de biométhane;
d) Une étape de formation d'un signal de commande à partir de données issues de l'unité de valorisation de biométhane,
e) Une étape de mélange du flux de biométhane et du flux de dioxyde de carbone issus de l'unité de séparation membranaire en fonction du signal de commande formée à l'étape d), et
f) Une étape de recyclage du mélange issu de l'étape e) dans le digesteur.

Autrement dit, dans le procédé selon l'invention pendant un temps T l'unité de valorisation sera dans une phase transitoire. Et pendant cette phase transitoire, l'unité de valorisation enverra un signal de commande induisant le mélange du flux de biomethane et du flux de dioxyde de carbone. En dehors de cette phase transitoire le flux de biométhane sera envoyé à l'unité de valorisation et il n'y aura pas de mélange du flux de biomethane et du flux de dioxyde de carbone.

Le procédé selon l'invention pourra également comprendre une étape de désulfuration du biogaz avant son entrée dans l'unité de séparation membranaire.

Selon un autre mode particulier, le procédé selon l'invention pourra comprendre une étape de compression du biogaz avant son entrée dans l'unité de séparation membranaire.

Le procédé selon l'invention présente les avantages suivants :
- la composition du gaz dans le digesteur n'est pas modifiée pendant la phase transitoire,
- Le fonctionnement transitoire, s'il est court, n'affecte pas le fonctionnement de l'unité de valorisation, car le fonctionnement décalé est minimisé, l'état stationnaire peut être récupéré en peu de temps,
- Aucune torche spécifique au biométhane ne doit être investie.
- Cette invention permet également d'effectuer un test de performance à plein débit, même si le digesteur ne fonctionne pas à pleine capacité.

## Revendications

1. Installation d'ajustement de la production de biométhane en fonction du fonctionnement d'une unité de valorisation de biométhane, comprenant :
- Un digesteur permettant de produire du biogaz,
- Une unité de séparation membranaire permettant de produire un flux de biométhane et un flux de dioxyde de carbone à partir du biogaz issu du digesteur,
- Une unité de valorisation du biométhane issu de l'unité de séparation membranaire,
- Un premier moyen permettant de mélanger le flux de biométhane et le flux de dioxyde de carbone issus de l'unité de séparation membranaire,
- Un deuxième moyen permettant d'envoyer un signal de commande de l'unité de valorisation au premier moyen, et
- Un troisième moyen permettant de recycler le mélange issu du premier moyen dans le digesteur.

2. Installation selon la revendication 1, **caractérisée en ce qu'**elle comprend un moyen permettant de désulfurer le biogaz en aval du digesteur et en amont de l'unité de séparation membranaire.

3. Installation selon l'une des revendications 1 ou 2, **caractérisée en ce qu'**elle comprend un compresseur en aval du digesteur et en amont de l'unité de séparation membranaire.

4. Installation selon l'une des revendications 1 à 3, **caractérisée en ce que** l'unité de valorisation du biométhane est un réseau de gaz naturel.

5. Installation selon l'une des revendications 1 à 4, **caractérisée en ce que** le premier moyen permettant de mélanger le flux de biométhane et le flux de dioxyde de carbone comprend une tuyauterie.

6. Installation selon l'une des revendications 1 à 5, **caractérisée en ce que** l'unité de séparation membranaire comprend :
- Un premier étage de séparation par membrane apte à recevoir le biogaz et à fournir un premier perméat et un premier rétentat,
- Un deuxième étage de séparation par membrane apte à recevoir le premier rétentat et à fournir un second perméat et un second rétentat, et
- Un troisième étage de séparation par membrane apte à recevoir le premier perméat et à fournir un troisième perméat et un troisième rétentat.

7. Installation selon la revendication 6, **caractérisée en ce que** chaque étage de séparation par membrane comprend une membrane plus perméable au dioxyde de carbone qu'au méthane.

8. Procédé d'ajustement de la production de biométhane en fonction du fonctionnement d'une unité de valorisation de biométhane, utilisant une installation selon l'une des revendications 1 à 7 et comprenant :
a) Une étape de production de biogaz dans le digesteur,
b) Une étape de traitement du biogaz dans l'unité de séparation membranaire de manière à produire un flux de biométhane et un flux de dioxyde de carbone,
c) Une étape de valorisation du biométhane dans l'unité de valorisation de biométhane;
d) Une étape de formation d'un signal de commande à partir de données issues de l'unité de valorisation de biométhane,
e) Une étape de mélange du flux de biométhane et du flux de dioxyde de carbone issus de l'unité de séparation membranaire en fonction du signal de commande formée à l'étape d), et
f) Une étape de recyclage du mélange issu de l'étape e) dans le digesteur.

9. Procédé d'ajustement selon la revendication 8, **caractérisé en ce qu'**il comprend une étape de désulfuration du biogaz avant son entrée dans l'unité de séparation membranaire.

10. Procédé d'ajustement selon l'une des revendications 8 ou 9, **caractérisé en ce qu'**il comprend une étape de compression du biogaz avant son entrée dans l'unité de séparation membranaire.

## Patentansprüche

1. Anlage zur Anpassung der Biomethanproduktion in Abhängigkeit vom Betrieb einer Biomethan-Verwertungseinheit, die Folgendes umfasst:
- einen Fermenter zur Produktion von Biogas,
- eine Membrantrenneinheit zur Produktion eines Biomethanstroms und eines Kohlendioxidstroms aus Biogas aus dem Fermenter,
- eine Verwertungseinheit für Biomethan aus der Membrantrenneinheit,
- ein erstes Mittel zum Mischen des Biomethanstroms und des Kohlendioxidstroms aus der Membrantrenneinheit,
- ein zweites Mittel zum Senden eines Steuersignals der Verwertungseinheit zum ersten Mittel und
- ein drittes Mittel zum Zurückführen der Mischung aus dem ersten Mittel in den Fermenter.

2. Anlage nach Anspruch 1, **dadurch gekennzeichnet, dass** sie ein Mittel zum Entschwefeln des Biogases nach dem Fermenter und vor der Membrantrenneinheit umfasst.

3. Anlage nach einem der Ansprüche 1 oder 2, **dadurch gekennzeichnet, dass** sie einen Kompressor nach dem Fermenter und vor der Membrantrenneinheit umfasst.

4. Anlage nach einem der Ansprüche 1 bis 3, **dadurch gekennzeichnet, dass** es sich bei der Biomethan-Verwertungseinheit um ein Erdgasnetz handelt.

5. Anlage nach einem der Ansprüche 1 bis 4, **dadurch gekennzeichnet, dass** das erste Mittel zum Mischen des Biomethanstroms und des Kohlendioxidstroms Rohrleitungen umfasst.

6. Anlage nach einem der Ansprüche 1 bis 5, **dadurch gekennzeichnet, dass** die Membrantrenneinheit Folgendes umfasst:
- eine erste Membrantrennstufe zur Aufnahme des Biogases und zur Bereitstellung eines ersten Permeats und eines ersten Retentats,
- eine zweite Membrantrennstufe zur Aufnahme des ersten Retentats und zur Bereitstellung eines zweiten Permeats und eines zweiten Retentats und
- eine dritte Membrantrennstufe zur Aufnahme des ersten Retentats und zur Bereitstellung eines dritten Permeats und eines dritten Retentats.

7. Anlage nach Anspruch 6, **dadurch gekennzeichnet, dass** jede Membrantrennstufe eine Membran umfasst, die für Kohlendioxid durchlässiger als für Methan ist.

8. Verfahren zur Anpassung der Biomethanproduktion in Abhängigkeit vom Betrieb einer Biomethan-Verwertungseinheit, bei dem eine Anlage nach einem der Ansprüche 1 bis 7 verwendet wird und das Folgendes umfasst:
a) einen Schritt der Biogasproduktion im Fermenter,
b) einen Schritt der Behandlung des Biogases in der Membrantrenneinheit, um einen Biomethanstrom und einen Kohlendioxidstrom zu produzieren,
c) einen Schritt der Verwertung des Biomethans in der Biomethan-Verwertungseinheit;
d) einen Schritt der Erzeugung eines Steuersignals aus Daten von der Biomethan-Verwertungseinheit,
e) einen Schritt des Mischens des Biomethanstroms und des Kohlendioxidstroms aus der Membrantrenneinheit in Abhängigkeit von dem in Schritt d) erzeugten Steuersignal und
f) einen Schritt des Zurückführens der Mischung aus Schritt e) in den Fermenter.

9. Verfahren zur Anpassung nach Anspruch 8, **dadurch gekennzeichnet, dass** es einen Schritt der Entschwefelung des Biogases vor seinem Einlass in die Membrantrenneinheit umfasst.

10. Verfahren zur Anpassung nach einem der Ansprüche 8 oder 9, **dadurch gekennzeichnet, dass** es einen Schritt der Komprimierung des Biogases vor seinem Einlass in die Membrantrenneinheit umfasst.

## Claims

1. Installation for adjusting the production of biomethane in accordance with the operation of a biomethane utilization unit, comprising:
- a digester for producing biogas,
- a membrane separation unit for producing a stream of biomethane and a stream of carbon dioxide from the biogas obtained from the digester,
- a unit for utilizing the biomethane obtained from the membrane separation unit,
- a first means for mixing the stream of biomethane and the stream of carbon dioxide obtained from the membrane separation unit,
- a second means for sending a control signal from the utilization unit to the first means, and
- a third means for recycling the mixture obtained from the first means into the digester.

2. Installation according to Claim 1, **characterized in that** it comprises a means for desulfurizing the biogas downstream of the digester and upstream of the membrane separation unit.

3. Installation according to either of Claims 1 and 2, **characterized in that** it comprises a compressor downstream of the digester and upstream of the membrane separation unit.

4. Installation according to one of Claims 1 to 3, **characterized in that** the biomethane utilization unit is a natural gas network.

5. Installation according to one of Claims 1 to 4, **characterized in that** the first means for mixing the stream of biomethane and the stream of carbon dioxide comprises a pipe system.

6. Installation according to one of Claims 1 to 5, **characterized in that** the membrane separation unit comprises:
- a first membrane separation stage able to receive the biogas and provide a first permeate and a first retentate,
- a second membrane separation stage able to receive the first retentate and provide a second permeate and a second retentate, and
- a third membrane separation stage able to receive the first permeate and provide a third permeate and a third retentate.

7. Installation according to Claim 6, **characterized in that** each membrane separation stage comprises a membrane that is more permeable to carbon dioxide than to methane.

8. Method for adjusting the production of biomethane in accordance with the operation of a biomethane utilization unit, using an installation according to one of Claims 1 to 7 and comprising:
a) a step of producing biogas in the digester,
b) a step of treating the biogas in the membrane separation unit so as to produce a stream of biomethane and a stream of carbon dioxide,
c) a step of utilizing the biomethane in the biomethane utilization unit,
d) a step of forming a control signal on the basis of data obtained from the biomethane utilization unit,
e) a step of mixing the stream of biomethane and the stream of carbon dioxide obtained from the membrane separation unit in accordance with the control signal formed in step d), and
f) a step of recycling the mixture obtained from step e) into the digester.

9. Adjustment method according to Claim 8, **characterized in that** it comprises a step of desulfurizing the biogas before it enters the membrane separation unit.

10. Adjustment method according to either of Claims 8 and 9, **characterized in that** it comprises a step of compressing the biogas before it enters the membrane separation unit.
